# EUROPÄISCHE PATENTSCHRIFT

(11) **EP 3 876 060 B1**
(45) Veröffentlichungstag und Bekanntmachung des Hinweises auf die Patenterteilung: **05.07.2023**
(21) Anmeldenummer: 21159822.2
(22) Anmeldetag: 01.03.2021
(51) Int. Cl.: G05B 23/02, G06N 20/00

(54) **VERFAHREN UND RECHENEINHEIT ZUR URSACHENANALYSE EINES ANOMALEN ZUSTANDES EINER MASCHINE**
METHOD AND COMPUTING UNIT FOR ANALYZING THE REASON FOR AN ANOMALOUS STATE OF A MACHINE
PROCÉDÉ ET UNITÉ DE CALCUL DESTINÉS À L'ANALYSE DES CAUSES D'UN ÉTAT ANORMAL D'UNE MACHINE

(30) Priorität: 06.03.2020 DE 102020202866
(43) Veröffentlichungstag der Anmeldung: 08.09.2021
(73) Patentinhaber: Robert Bosch GmbH, 70442 Stuttgart (DE)
(72) Erfinder: Torikka, Tapio, 97816 Lohr (DE); Kuhn, Marcel, 97074 Wuerzburg (DE)

(56) Entgegenhaltungen:
- US-A1- 2010 274 433
- US-A1- 2019 279 443
- VARUN CHANDOLA ET AL: "Anomaly detection", ACM COMPUTING SURVEYS, ACM, NEW YORK, NY, US, US, Bd. 41, Nr. 3, 30. Juli 2009 (2009-07-30), Seiten 1-58, XP058269522, ISSN: 0360-0300, DOI: 10.1145/1541880.1541882

## Beschreibung

Die vorliegende Erfindung betrifft ein Verfahren zur Analyse der Ursache für einen anomalen Zustand einer Maschine in einem auf einem Modell basierenden Überwachungsverfahren.

### Stand der Technik

Bekannt sind Metriken zur Quantifizierung, inwieweit der Betriebszustand einer Maschine von einem normalen Betriebszustand, in dem die Maschine fehlerfrei läuft, abweicht. Diese Metriken messen sozusagen einen Abstand eines Betriebszustands der Maschine von fehlerfreien Referenzzuständen der Maschine, mit denen die Metrik definiert wurde. Wird eine bestimmte Schwelle überschritten, so wird davon ausgegangen, dass ein anomaler Zustand vorliegt, dass also eine Fehlfunktion der Maschine aufgetreten ist.

Solche Metriken zeigen zwar an, wie stark der Betrieb während eines anomalen Zustands von einem normalen Betrieb der Maschine abweicht, sie geben jedoch keinen Hinweis auf die Ursache für den anomalen Zustand. Nachdem durch die Metrik eine Anomalie angezeigt wurde muss eine Person, die die Maschine bedient, oder ein Ingenieur unter Zuhilfenahme von Expertenwissen über die Maschine die Ursache der Anomalie herausfinden, bevor geeignete Maßnahmen zur Behebung eingeleitet werden können. Bei großen Maschinen kann diese manuelle Ursachensuche sehr zeitaufwendig sein, was unter Umständen zu langen Stillstandzeiten der Maschine oder zu einer weiteren Beschädigung der Maschine führen kann, falls die Anomalie als nicht schwerwiegend genug erachtet wird, um einen Stopp der Maschine zu rechtfertigen.

Zur Überwachung von Maschinen wird typischerweise eine Vielzahl von Sensoren eingesetzt, die Betriebsparameter der Maschine erfassen. Dabei fallen große Mengen an Sensordaten an und es können komplexe Zusammenhänge zwischen verschiedenen Sensorsignalen bestehen. Um diese Datenmengen verarbeiten zu können und komplexe, nicht explizit bekannte Zusammenhänge zwischen Sensordaten berücksichtigen zu können, werden Verfahren des maschinellen Lernens bei der Überwachung von Maschinen eingesetzt. D.h. ein auf maschinellem Lernen basierender Algorithmus wird eingesetzt, um die Metrik zu definieren, bzw. um den Abstand eines Betriebszustandes von normalen Betriebszuständen zu quantifizieren.

Werden einerseits Verfahren des maschinellen Lernens eingesetzt, um eine Anomalie zu erkennen, und andererseits bei einer parallelen Ursachenanalyse mittels Expertenwissens vorgegangen, etwa bei einem regelbasierten Ansatz, können diese unterschiedlichen Ansätze zu inkonsistenten Ergebnissen führen, es wird also z.B. eine Anomalie erkannt, bei der Ursachenanalyse kann jedoch kein Grund für die Anomalie festgestellt werden.

US 2019/0279443 A1 betrifft die Verwendung von Indikatoren zur Flugzeugwartung, wobei aus Spektrumsdaten mittels eines Autoencoder Spektralreste bestimmt werden, um Zustandsdaten des Flugzeugs zu bestimmen. Im Übersichtsartikel Varun Ch. et al, "Anomaly detection: A Survey", ACM COMPUTING SURVEYS, ACM, NEWYORK, NY, US, US, (20090730), vol. 41, no. 3, doi:10.1145/1541880.1541882, ISSN 0360-0300, pages 1 - 58 werden verschiedene Methoden zur Anomalieerkennung erläutert.

### Offenbarung der Erfindung

Erfindungsgemäß werden ein Verfahren zur Analyse der Ursache für einen anomalen Zustand einer Maschine, eine entsprechende Recheneinheit, ein entsprechendes Computerprogramm und ein entsprechendes Speichermedium mit den Merkmalen der unabhängigen Patentansprüche vorgeschlagen. Vorteilhafte Ausgestaltungen sind Gegenstand der Unteransprüche sowie der nachfolgenden Beschreibung.

Die Erfindung schafft eine Methode zur Ursachenanalyse für auf maschinellem Lernen basierende Maschinenüberwachungsverfahren, die bei einer durch das Maschinenüberwachungsverfahren erkannten Anomalie in konsistenter Weise einen Hinweis auf die Ursache der Anomalie gibt.

Das Verfahren zur Analyse der Ursache für einen anomalen Zustand einer Maschine wird angewendet in einem auf einem Modell basierenden Überwachungsverfahren, das anomale Zustände der Maschine erkennt, indem es ein Anomaliemaß bestimmt, wobei das Modell Maschinenzustände modelliert, indem mindestens zwei Betriebsparameter der Maschine, die als Eingabewerte des Modells dienen, als Ausgabewerte rekonstruiert werden. Dabei weisen Ausgabewerte des Modells gegenüber den jeweils entsprechenden Eingabewerten Abweichungen auf und das Modell wurde durch maschinelles Lernen trainiert, die Abweichungen zu minimieren. Wenn durch das Überwachungsverfahren ein anomaler Zustand erkannt wurde, werden ein Rekonstruktionsfehler für jeden der Betriebsparameter basierend auf dem Eingabewert und dem durch das Modell rekonstruierten Ausgabewert des jeweiligen Betriebsparameters bestimmt, mindestens ein Betriebsparameter auf Grundlage der Rekonstruktionsfehler ausgewählt und der mindestens eine ausgewählte Betriebsparameter ausgegeben.

Das erfindungsgemäße Verfahren ermöglicht es, in einem Überwachungsverfahren, das ein Anomaliemaß bestimmt, indem es einen durch Parameter erfassten Zustand (hier Betriebsparameter einer Maschine) in einem Modell modelliert, das Eingabewerte als Ausgabewerte rekonstruiert, bei festgestellter Anomalie Hinweise über die Ursache, d.h. in welchem Maschinenteil liegt wahrscheinlich ein Fehler vor, zu erhalten. Dazu werden individuelle Rekonstruktionsfehler für jeden der Betriebsparameter bestimmt und analysiert. Da bekannt ist, zu welchem Maschinenbereich die Betriebsparameter gehören, z.B. wo ein bestimmter Sensorwert erfasst wird, kann ausgehend von einem Betriebsparameter mit besonders großem Rekonstruktionsfehler auf das Maschinenteil geschlossen werden, in dem der Fehler wahrscheinlich aufgetreten ist. Im Allgemeinen sind die Rekonstruktionsfehler als Zahlenwerte gegeben, die auf geeignete Weise, siehe verschiedene nachstehend beschriebene Ausführungsformen, bestimmt werden.

Durch diese Vorgehensweise können Inkonsistenzen vermieden werden, da die Ursachenanalyse auf den gleichen Modellen beruht wie die Anomalieerkennung.

Unter "Betriebsparameter" einer Maschine sollen Daten verstanden werden, die erfasst werden, um den Betrieb der Maschine zu überwachen. Insbesondere handelt es sich hierbei um Sensorwerte, die durch an der Maschine angeordnete Sensoren gemessen werden. Es kann sich aber auch um vorgegebene, etwa durch die Steuerung der Maschine, Parameter handeln. Weiter ist es möglich, dass die Betriebsdaten bereits vorverarbeitete Daten umfassen, etwa Werte einer schnellen Fourier-Transformation (FFT) regelmäßiger Messwerte. Bei der zu überwachenden Maschine kann es sich beispielsweise um eine Hydraulikanlage handeln; in diesem Fall können die Sensordaten beispielhaft ausgewählt sein aus Druck und Volumenstrom von Hydraulikflüssigkeiten, Temperaturen von Hydraulikflüssigkeiten oder Maschinenteilen, Stellungen eines Hydraulikzylinders oder auch Drehmoment, Leistungsabgabe von Motoren, die Pumpen antreiben.

Die Ausdrücke "Abweichungen" und "Rekonstruktionsfehler" sollen hier in einem allgemeinen Sinn verstanden werden, d.h. auch den Fall, dass die Abweichung bzw. der Rekonstruktionsfehler gleich Null ist, umfassen. Dieser Fall tritt allerdings bei einer realen Maschine und bei realistischen Modellen, die eine Modellierung mittels dimensionaler Reduktion vornehmen, nur sehr selten auf.

Die spezielle Art und der innere Aufbau des Modells sind für die Durchführung des erfindungsgemäßen Verfahrens nicht relevant, es muss sich lediglich um ein rekonstruierendes Modell handeln, d.h. ein Modell, das Eingabewerte auf Ausgabewerte mit der gleichen Bedeutung abbildet, was z.B. im Rahmen maschinellen Lernens trainiert wird. Abgesehen davon kann das Modell als eine "Black Box" betrachtet werden.

Auch wenn das Modell im Prinzip als "Black Box" betrachtet werden kann, werden dennoch zum besseren Verständnis im Folgenden der Begriff "Modell", wie er im Rahmen dieser Erfindung verwendet wird, und Maschinen-Überwachungsverfahren, die auf diesen Modellen basieren, kurz erläutert. Unter Modell ist die Modellierung von Betriebszuständen bzw. von deren gemessenen Betriebsparametern durch einen auf künstlicher Intelligenz bzw. maschinellem Lernen basierenden Algorithmus zu verstehen. In einem als Training oder Lernen bezeichneten Vorgang generieren Algorithmen des maschinellen Lernens basierend auf Beispieldaten (sogenannten Trainingsdaten) ein mathematisches Modell, um Vorhersagen über einen Vorgang (hier Betriebszustände einer Maschine) zu machen, ohne dafür explizit programmiert zu sein. Ein Modell kann als eine Abbildung bzw. Funktion betrachtet werden, die Eingabewerte, hier die Betriebsparameter der zu überwachenden Maschine, auf Ausgabewerte abbildet. Für die Fehlerüberwachung von Maschinen werden Modelle betrachtet, die die Betriebszustände so modellieren, dass die Eingabewerte, also die Betriebsparameter, als Ausgabewerte des Modells zurückgewonnen werden. Sozusagen rekonstruiert das Modell die Eingabe, entsprechende Modelle könnten also als "Rekonstruktions-Modell" oder "rekonstruierendes Modell" bezeichnet werden. Eine Fehler-Metrik kann dann durch einen Vergleich der Ausgabewerte mit den eingegebenen Betriebsparametern (die ja die Eingabewerte des Modells sind) erhalten werden, etwa als mittlere quadratische Abweichung. Modelle, die von Maschinenüberwachungsverfahren zur Anomalieerkennung eingesetzt werden, sind typischerweise so gewählt, dass innerhalb des Modells eine dimensionale Reduktion der Parameter erfolgt (ein Nachbilden der identischen Abbildung ist also nicht möglich). Ein Betriebszustand ist dann sozusagen durch das Modell in einem dimensional reduzierten Raum codiert. Das Modell erzeugt die Ausgabewerte aus diesem dimensional reduzierten Raum, dies kann als Decodierung gesehen werden. Tritt in der überwachten, durch das Modell modellierten Maschine eine Anomalie bzw. Fehlfunktion auf, führt dies zu Abweichungen der Betriebsparameter, die durch die Codierung nicht mehr umfasst sind, so dass die Fehler-Metrik, die als Anomaliemaß dient, einen höheren Wert ergibt. Der Einsatz solcher Modelle zur Anomalieerkennung und zur Überwachung von Betriebszuständen von Maschinen ist im Prinzip bekannt. Typischerweise sind die Modelle als (künstliche) neuronale Netzwerke, z.B. Autoencoder, verwirklicht.

Da die Messwerte, d.h. die Zahlenwerte, die letztendlich als Eingabewerte für das Modell dienen sollen, für unterschiedliche Betriebsparameter im Allgemeinen unterschiedliche Grö-ßenwerte und unterschiedliche Bandbreiten aufweisen, können diese Messwerte, bevor ein Modell auf diese angewandt wird, normalisiert werden, d.h. sie sollten so in Datenwerte, die als Eingabe für das Modell dienen sollen, geändert werden, dass die Datenwerte für unterschiedliche Betriebsparameter alle innerhalb eines gemeinsamen Wertebereichs, etwa von 0 bis 1, oder von -1 bis +1, liegen. Diese Normalisierung umfasst typischerweise eine Normierung und eine Skalierung der Datenwerte. Eine Normalisierung ist vorteilhaft, da dann die Rekonstruktionsfehler unterschiedlicher Betriebsparameter in einem ähnlichen Bereich liegen, so dass die Rekonstruktionsfehler unterschiedlicher Betriebsparameter nicht unterschiedlich behandelt werden müssen und im Besonderen miteinander vergleichbar sind.

Gemäß einer Ausführungsform können die Rekonstruktionsfehler bestimmt werden als Quotient eines Absolutwerts einer Differenz von Eingabewert und Ausgabewert für jeden der Betriebsparameter und eines Gesamtrekonstruktionsfehlers, wobei bevorzugt der Gesamtrekonstruktionsfehler dem Anomaliemaß entspricht. Anders gesagt werden die Rekonstruktionsfehler als relative Rekonstruktionsfehler bezogen auf den Gesamtfehler der Rekonstruktion bestimmt. Die so bestimmten Rekonstruktionsfehler beschreiben den Anteil der jeweiligen Betriebsparameter am Gesamtfehler der Rekonstruktion. Ist der Anteil eines Rekonstruktionsfehlers relativ hoch am Gesamtfehler, so ist davon auszugehen, dass die Ursache für den anomalen Zustand mit dem zugehörigen Betriebsparameter, also z.B. dem Maschinenteil in dem der Betriebsparameter erfasst wurde, zusammenhängt. Analog gilt das, wenn der Anteil mehrerer, etwa zwei oder drei, Rekonstruktionsfehler relativ groß ist, dann kann davon ausgegangen werden, dass die Ursache für die Anomalie (Fehlfunktion) in einem Maschinenteil liegt, das mit den entsprechenden Betriebsparametern zusammenhängt. Ist andererseits der Anteil aller Rekonstruktionsfehler in etwas gleich, so kann dies ein Hinweis darauf sein, dass eine Fehlfunktion der Maschine in einem Bereich vorliegt, für den keine Betriebsparameter erfasst werden.

Das erfindungsgemäße Verfahren umfasst weiterhin: Bestimmen und Erfassen von Abweichungen zwischen Eingabewerten und Ausgabewerten für jeden der Betriebsparameter, wenn durch das Überwachungsverfahren kein anomaler Zustand erkannt wurde, um eine Stichprobe von normalen Abweichungen für jeden der Betriebsparameter zu erhalten; Bestimmen einer Wahrscheinlichkeitsverteilung für die Abweichungen jedes der Betriebsparameter aus den Stichproben; und im Schritt des Bestimmens der Rekonstruktionsfehler, Bestimmen der Rekonstruktionsfehler der Betriebsparameter basierend auf der jeweiligen Wahrscheinlichkeitsverteilung. Entsprechend dieser Ausführungsform wird für jeden Betriebsparameter eine (statistische) Verteilung der Abweichungen zwischen Eingabewerten und Ausgabewerte während eines Normalbetriebszustands, in dem keine Fehlfunktion vorliegt, ermittelt; dieser Normalbetriebszustand liegt normalerweise zeitlich vor dem Betriebszustand, in dem eine Anomalie festgestellt wurde. Für jeden der Betriebsparameter wird dann die Abweichung von Ein- und Ausgabewert auf die Verteilung bezogen, um den Rekonstruktionsfehler zu bestimmen. So kann eine unterschiedliche große Streuung der Abweichung in der Modellierung im Normalbetrieb berücksichtigt werden; z.B. wird eine Abweichung bei einem Betriebsparameter, der im Normalbetrieb bei der Modellierung nur sehr wenig streut, hervorgehoben.

Erfindungsgemäß umfasst das Verfahren weiter: Bereitstellen und Trainieren eines Untermodells für jeden der Betriebsparameter, wobei für jeden der Betriebsparameter das jeweilige Untermodell als Eingabewerte die Ausgabewerte des Modells mit Ausnahme des Betriebsparameters, dem das Untermodell zugehörig ist, umfasst und als weiteren Eingabewert bzw. weitere Eingabewerte den Wert des Betriebsparameters, den Wert des Betriebsparameters und den dem Betriebsparameter entsprechenden Ausgabewert des Modells, oder den Absolutwert der Differenz zwischen Eingabewert des Betriebsparameters und dem dem Betriebsparameter entsprechenden Ausgabewert des Modells umfasst; und im Schritt des Bestimmens der Rekonstruktionsfehler, Bestimmen des Rekonstruktionsfehlers eines Betriebsparameters als Abweichung von Eingabewerte und Ausgabewert dieses Betriebsparameters in dem zu diesem Betriebsparameter gehörigen Untermodell.

Da die bei der Maschinenüberwachung verwendeten Modelle bei der Modellierung von Betriebszuständen eine dimensionale Reduktion vornehmen, bei der kleine, für den Betriebszustand nicht charakteristische Schwankungen nicht nachvollzogen werden, sind die Ausgabewerte gegenüber den Eingabewerte typischerweise etwas geglättet bzw. "vereinfacht", so dass diese kleinere Schwankungen bzw. Störungen in den Eingabewerten nicht widerspiegeln. Wird nun ein weiteres Modell, hier als "Untermodell" bezeichnet, auf die Ausgabewerte des Modells angewendet (d.h. Ausgabewerte des Modells sind die Eingabewerte des Untermodells) und dieses Untermodell mit maschinellem Lernen trainiert, diese Ausgabewerte des Modells als eigene Ausgabewerte zu rekonstruieren, so wird diese erneute Rekonstruktion durch das Untermodell genauer sein, also geringere Abweichungen aufweisen, da durch das Modell bereits eine Glättung bzw. Vereinfachung stattfand. Diese Eigenschaft bleibt auch erhalten, wenn ein Eingabewert (oder einige Eingabewerte) des Untermodells nicht der Ausgabewert des Modells ist, sondern aus dem ursprünglichen Eingabewert (Wert des erfassten Betriebsparameters) des Modells gewonnen ist. Für jeden der Betriebsparameter wird ein zugehöriges Untermodell vorgesehen, wobei die Untermodelle zusammen mit dem Modell trainiert werden.

Es sind verschiedene Möglichkeiten vorgesehen, einen Eingabewert der Untermodelle zu ersetzen. Eine Möglichkeit ist, statt des zu einem Betriebsparameter gehörigen Ausgabewertes des Modells den ursprünglichen Wert des Betriebsparameters, d.h. den entsprechenden Eingabewert des Modells, als den dem Betriebsparameter entsprechenden Eingabewert des Untermodells zu verwenden. Weiter ist es möglich, statt nur des zu einem Betriebsparameter gehörigen Ausgabewertes des Modells sowohl den ursprünglichen Wert des Betriebsparameters, d.h. den entsprechenden Eingabewert des Modells, als auch den entsprechenden Ausgabewert des Modells als entsprechenden Eingabewert des Untermodells zu verwenden. Drittens kann die Differenz dieser beiden Werte statt des zu einem Betriebsparameter gehörigen Ausgabewertes des Modells als entsprechender Eingabewert des Untermodells verwendet werden, d.h. die Differenz von Eingabewert des Modells und entsprechendem Ausgabewert des Modells. In jedem Fall wird aufgrund der bereits vorher stattfindenden Glättung durch das Modell der Gesamtrekonstruktionsfehler des Untermodells, das zu einem Betriebsparameter gehört, der mit der Ursache einer Anomalie der Maschine in Verbindung steht, erhöht. Gesamtrekonstruktionsfehler des Untermodells ist hier auf die Modellierung durch das Untermodell bezogen, d.h. die Rekonstruktion der Eingabewerte des Untermodells durch die Ausgabewerte des Untermodells, also die Abweichung zwischen Ein- und Ausgabewerten des Untermodells.

Erfindungsgemäß erfolgt das Auswählen des mindestens einen Betriebsparameters auf Grundlage einer Größe der Rekonstruktionsfehler, wobei eine bestimmte Anzahl von Betriebsparametern mit dem größten Rekonstruktionsfehler ausgewählt wird. Alternativ (nicht beansprucht) kann eine bestimmte Anzahl von Betriebsparametern mit den kleinsten Rekonstruktionsfehlern ausgewählt werden.

Gemäß einer Ausführungsform können diejenigen Betriebsparameter ausgewählt werden, deren Rekonstruktionsfehler eine Größe aufweist, die über einer bestimmten Schwelle liegt. Bevorzugt wird die Schwelle basierend auf einer Verteilung der Größe der Rekonstruktionsfehler bestimmt.

Gemäß einer Ausführungsform kann das Verfahren weiterhin umfassen: Variieren des zu dem mindestens einen ausgewählten Betriebsparameter gehörigen Eingabewerts (bzw. der Eingabewerte, wenn mehrere Betriebsparameter ausgewählt wurden) des Modells in einem definierten Bereich; und Analysieren des Verhaltens der Variation der Rekonstruktionsfehler und/oder des Verhaltens des Anomaliemaßes. Dabei werden die anderen, nicht ausgewählten Betriebsparameter konstant gehalten. So kann das Ergebnis der Ursachenanalyse auf Konsistenz geprüft werden, d.h. es kann anhand des Verhaltens der durch die Variation der Betriebsparameter verursachten Variation der Rekonstruktionsfehler bzw. des durch das Anomliemaß bestimmten Gesamt-Rekonstruktionsfehlers validiert werden, ob der oder die ausgewählten Betriebsparameter ursächlich für die Anomalie sind. Wenn mehrere Betriebsparameter ausgewählt wurden, werden diese unabhängig voneinander variiert. Der Begriff der Variation soll hier (wenn mehrere Betriebsparameter ausgewählt wurden) den Fall einschließen, dass nur einer der ausgewählten Betriebsparameter geändert wird. Insbesondere ist es möglich, nur einen der ausgewählten Betriebsparameter zu variieren und die anderen ausgewählten Betriebsparameter nicht oder nur sehr wenig zu variieren, so kann der Einfluss eines einzelnen Betriebsparameters analysiert werden.

Wurde z.B. ein anomaler Zustand erkannt und ein Drucksignal verfahrensgemäß ausgewählt, wird der Druck definiert innerhalb eines Bereichs geändert, z.B. von 20 Bar auf einen oder mehrere Werte im Bereich von 20 bis 100 Bar, und alle Werte wie beispielsweise Temperatur, Volumenstrom werden nicht verändert. Während des definierten Änderns bzw. Variierens des Betriebsparameters wird das entsprechende Verhalten der Rekonstruktionsfehler und/oder des Anomaliemaßes bzw. Gesamt-Rekonstruktionsfehlers beobachtet, das mit der Variation des Betriebsparameters übereinstimmen sollte.

Vorzugsweise findet die Variation schrittweise innerhalb eines vorgegebenen Wertebereichs statt, wobei der Wertebereich weiter bevorzugt den erfassten Wert des Betriebsparameters, dessen Werte variiert werden, einschließt. Insbesondere kann gegebenenfalls durch eine schrittweise Variation, falls notwendig in beide Richtungen, d.h. mit kleineren und größeren Werten als der erfasste Wert des entsprechenden Betriebsparameters, auch eine Richtung festgestellt werden, in der das Anomaliemaß abnimmt bzw. die Rekonstruktionsfehler abnehmen oder sogar verschwindet bzw. verschwinden. Dies ist ein klarer Hinweis, dass sich der Betriebsparameter außerhalb eines Wertebereichs befindet, der für den Betriebsparameter in dem Betriebszustand, in dem sich die Maschine befindet, normal ist, da, falls der Betriebsparameter seinen normalen Wert hätte, das Anomaliemaß bzw. die Rekonstruktionsfehler fast Null sein sollte/sollten, vorausgesetzt die Modellierung der Betriebszustände ist hinreichend genau. Gegebenenfalls müssen hier, wenn mehrere Betriebsparameter ausgewählt wurden, mehrere Betriebsparameter gleichzeitig schrittweise variiert werden, um eine Richtung zu finden, in die das Anomaliemaß (bzw. die Rekonstruktionsfehler) abnimmt.

Noch allgemeiner können alle Betriebsparameter, auch nicht ausgewählte, variiert werden, um das genaue Verhalten des Modells zu analysieren. Dies ist insbesondere bei einer geringen Anzahl erfasster Betriebsparameter denkbar.

Erfindungsgemäß kann das Verfahren weiter ein Ausgeben der zu den ausgewählten Betriebsparametern gehörigen Rekonstruktionsfehler umfassen. So wird dem Bediener der Maschine oder dem Ingenieur erleichtert, den Fehler besser einschätzen zu können.

Eine erfindungsgemäße Recheneinheit, z.B. ein Steuergerät einer Hydraulikanlage, ist, insbesondere programmtechnisch, dazu eingerichtet, ein erfindungsgemäßes Verfahren durchzuführen.

Auch die Implementierung eines erfindungsgemäßen Verfahrens in Form eines Computerprogramms oder Computerprogrammprodukts mit Programmcode zur Durchführung aller Verfahrensschritte ist vorteilhaft, da dies besonders geringe Kosten verursacht, insbesondere wenn ein ausführendes Steuergerät noch für weitere Aufgaben genutzt wird und daher ohnehin vorhanden ist. Geeignete Datenträger zur Bereitstellung des Computerprogramms sind insbesondere magnetische, optische und elektrische Speicher, wie z.B. Festplatten, Flash-Speicher, EEPROMs, DVDs u.a.m. Auch ein Download eines Programms über Computernetze (Internet, Intranet usw.) ist möglich.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in der Zeichnung schematisch dargestellt und wird im Folgenden unter Bezugnahme auf die Zeichnung ausführlich beschrieben.

### Figurenbeschreibung

Figur 1 zeigt ein Ablaufdiagramm einer bevorzugten Ausführungsform eines Verfahrens gemäß der Erfindung;
Figur 2 zeigt die Struktur eines Autoencoders, welcher zur Verwendung mit der Erfindung besonders geeignet ist;
Figur 3 zeigt eine Funktionsskizze der Ursachenanalyse gemäß einer bevorzugten Ausführungsform der Erfindung;
Figur 4 zeigt eine Funktionsskizze der Ursachenanalyse gemäß einer weiteren Ausführungsform der Erfindung;
Figur 5A und Figur 5B zeigen Ausschnitte von Funktionsskizzen der Ursachenanalyse gemäß weiterer Ausführungsformen der Erfindung.

### Detaillierte Beschreibung der Zeichnung

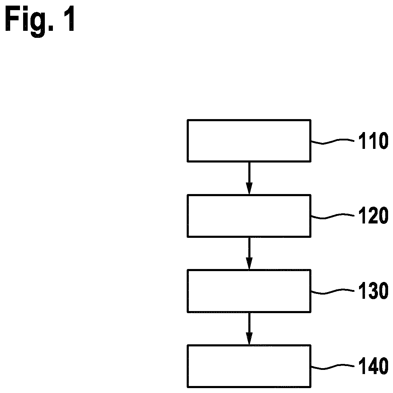

Figur 1 zeigt ein Ablaufdiagramm des Verfahrens zur Ursachenanalyse eines anomalen Zustands gemäß einer Ausführungsform der Erfindung. Das Verfahren wird angewandt bei einem Maschinen-Überwachungsverfahren, das ein Modell wie weiter oben beschrieben zur Erkennung von anomalen Zuständen bzw. Fehlfunktionen verwendet. Im Rahmen dieses Überwachungsverfahrens wird ein Anomaliemaß ermittelt, das ein Maß bzw. eine Metrik dafür ist, inwieweit sich die Maschine in einem normalen, störungsfreien Betriebszustand befindet bzw. davon abweicht. Anhand des Anomaliemaßes, z.B. wenn dieses einen bestimmten Wert überschreitet, kann festgestellt werden, ob ein anomaler Zustand der Maschine vorliegt.

In Schritt 110 des Verfahrens wird entsprechend zunächst festgestellt (bzw. bestimmt), ob durch das Überwachungsverfahren ein anomaler Zustand der Maschine erkannt wird. Dieser Schritt 110 wird vom Überwachungsverfahren durchgeführt, erst wenn durch das Überwachungsverfahren eine Anomalie erkannt wurde, greift das erfindungsgemäße Verfahren zur Ursachenanalyse der Anomalie, das auf dem Überwachungsverfahren aufbaut. Wenn ein anomaler Zustand der Maschine erkannt wird, wenn also das Überwachungsverfahren feststellt, dass ein anomaler Betriebszustand bzw. eine Fehlfunktion der Maschine aufgetreten ist, wird in Schritt 120 ein Rekonstruktionsfehler für jeden der Betriebsparameter bestimmt, basierend darauf in Schritt 130 mindestens ein Betriebsparameter ausgewählt und in Schritt 140 der mindestens eine ausgewählte Betriebsparameter ausgegeben.

Die Rekonstruktionsfehler für jeden der Betriebsparameter werden basierend auf dem Eingabewert und dem Ausgabewert des jeweiligen Betriebsparameters bestimmt. Hier sind unter Eingabewert und Ausgabewert die Eingabewerte und Ausgabewerte des Modells für den jeweiligen Betriebsparameter zu verstehen, wobei der Eingabewert gleich dem Betriebsparameter bzw. dem Wert des Betriebsparameters ist und der Ausgabewert der Wert der Ausgabe des Modells, die dem Betriebsparameter aufgrund des Trainings entspricht. Für die Bestimmung der Rekonstruktionsfehler gibt es verschiedene Möglichkeiten. Z.B. können die Rekonstruktionsfehler als Absolutwert der Differenz zwischen Eingabewert und Ausgabewert des Modells für jeden der Betriebsparameter bestimmt werden. Eine andere Möglichkeit besteht darin, diesen Absolutwert der Differenz zwischen Ein- und Ausgabewert ins Verhältnis zu einem Gesamtrekonstruktionsfehler zu setzen. Ein solcher Gesamtrekonstruktionsfehler kann z.B. durch das Anomaliemaß, mit dem festgestellt wird, ob ein anomaler Zustand vorliegt, gegeben sein.

Eine weitere Möglichkeit besteht darin, zunächst, während eines normalen Betriebs der Maschine, für jeden der Betriebsparameter eine Wahrscheinlichkeitsverteilung der Abweichungen zwischen Ein- und Ausgabe des Modells zu bestimmen und den Rekonstruktionsfehler für jeden Betriebsparameter basierend auf der entsprechenden Wahrscheinlichkeitsverteilung zu bestimmen. Als Wahrscheinlichkeitsverteilung kann bevorzugt die Standardverteilung verwendet werden. Die durch die Standardverteilung gegebene Standardabweichung dient dann als Einheit, in der Rekonstruktionsfehler gemessen wird, d.h. die Abweichung zwischen Ein- und Ausgabewert, wenn ein anomaler Zustand vorliegt, wird berechnet (durch einfache Differenzbildung) und der Abstand dieser berechneten Abweichung vom Mittelwert der Verteilung dann in Standardabweichungen ausgedrückt (d.h. der Abstand wird durch die Standardabweichung geteilt). Dies wird für jeden Betriebsparameter mit der zugehörigen Wahrscheinlichkeitsverteilung durchgeführt.

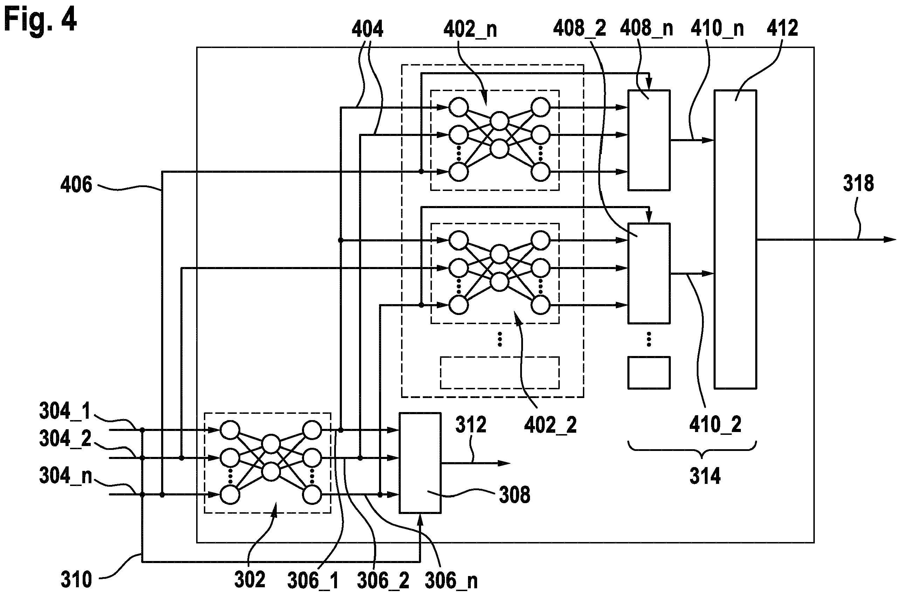

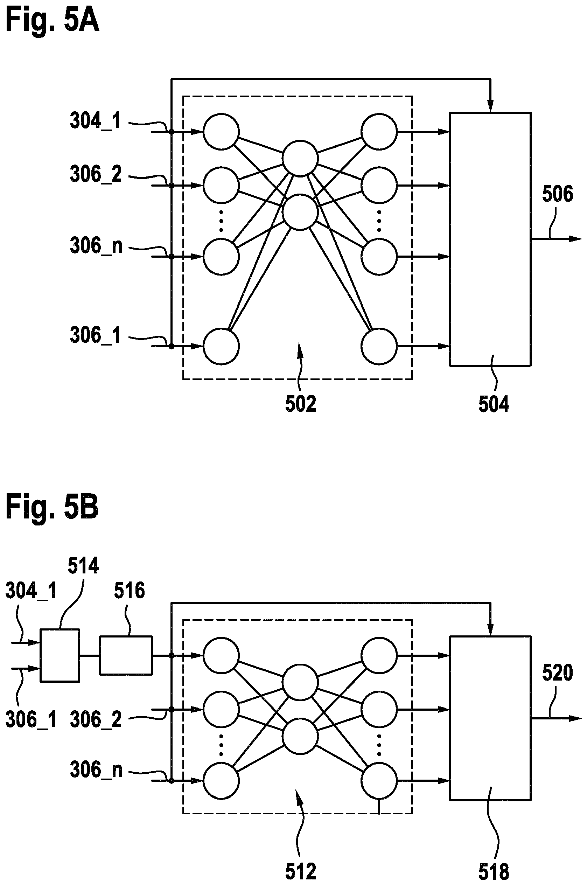

Im Zusammenhang mit den Figuren 4, 5A und 5B werden weiter unten weitere Möglichkeiten zur Bestimmung des Rekonstruktionsfehlers beschrieben.

Die Betriebsparameter werden in Schritt 130 so ausgewählt, dass anhand der ausgewählten Betriebsparameter die Ursache für die Anomalie eingegrenzt werden kann; aus der späteren Ausgabe kann also auf die Ursache, z.B. in welchem Maschinenteil, geschlossen werden. Bevorzugt werden diejenigen Betriebsparameter ausgewählt, deren Werte eine große absolute oder relative Abweichung von für den Betriebszustand typischen Werten aufweisen. Die normalen Betriebszustände sind durch das Modell modelliert, eine solche Abweichung äußert sich also in Rekonstruktionsfehlern des Modells. Die ausgewählten Betriebsparameter geben in diesem Fall einen Hinweis darauf, in welchem Maschinenteil eine Fehlfunktion aufgetreten ist, da Betriebsparameter typischerweise Sensorwerten entsprechen und die Sensoren bestimmten Maschinenteilen zugeordnet sind. Umgekehrt oder zusätzlich ist es prinzipiell auch möglich, diejenigen Betriebsparameter auszuwählen, die sich in dem Modell wie erwartet (d.h. kein oder kleiner Rekonstruktionsfehler) verhalten, so dass auf Maschinenteile geschlossen werden kann, in denen keine Fehlfunktion aufgetreten ist. Im ersten Fall wird eine bestimmte Anzahl von Betriebsparametern ausgewählt, deren Rekonstruktionsfehler am größten sind. Im zweiten Fall wird eine bestimmte Anzahl von Betriebsparameter ausgewählt, deren Rekonstruktionsfehler am kleinsten sind. Die Anzahl kann in beiden Fällen z.B. 1, 2, 3, 5, oder 10 sein. In beiden Fällen kann die Anzahl von der Gesamtzahl der Betriebsparameter abhängen; z.B. im Wesentlichen 5 %, 10 % oder 20 % der Gesamtzahl der Betriebsparameter, der Ausdruck "im Wesentlichen" bezieht sich hier darauf, dass gegebenenfalls auf- oder abgerundet werden muss, um eine ganze Zahl zu erhalten.

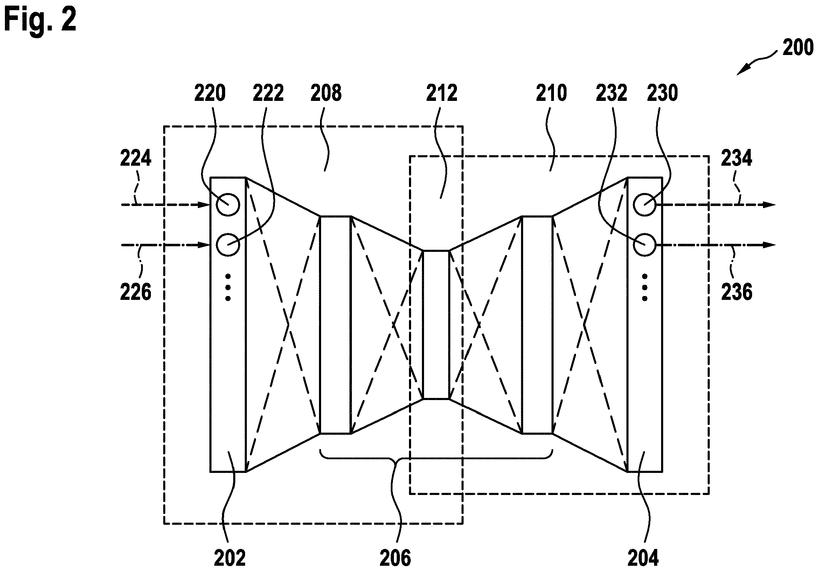

Figur 2 zeigt eine vereinfachte Darstellung der Struktur eines Autoencoders, wie er beispielsweise als Modell in dem Überwachungsverfahren, auf dem die vorliegende Erfindung aufbaut, verwendet werden kann. Im Prinzip können mit dem Autoencoder Referenzzustände der Maschine modelliert werden. Der Autoencoder 200 weist eine Eingabeschicht 202, eine Ausgabeschicht 204 und mehrere verdeckte Schichten 206 (in Figur 2 sind beispielhaft drei verdeckte Schichten gezeigt, es ist aber auch eine andere Anzahl möglich) auf. Jede der Schichten 202, 204, 206 umfasst ein oder mehrere Neuronen (von denen in Figur 2 nur einige Neuronen 220, 222, 230, 232 dargestellt sind). Die Neuronen der Ausgabeschicht 204 haben die gleiche Bedeutung wie die Neuronen der Eingabeschicht 202, d.h. die Werte an der Ausgabeschicht sollen den an der Eingabeschicht eingegebenen Werten entsprechen. Die Schichten 202, 204, 206, genauer die in den Schichten enthaltenen Neuronen, sind untereinander durch nicht weiter dargestellte (gewichtete) Kanten verbunden. Der Autoencoder codiert die Eingaben auf einer Codier-Seite 208 und decodiert sie auf einer Decodier-Seite 210 des Autoencoders 200. In einer oder in mehreren der verdeckten Schichten 206 wird ein Code gebildet, der die Eingabedaten in einer dimensional reduzierten Form repräsentiert.

Beim Training werden die Gewichte des Autoencoders, der ein neuronales Netz ist, so angepasst, dass die an den Neuronen der Ausgabeschicht 204 ausgegebenen Ausgabewerte bezüglich eines Fehlermaßes möglichst nah an den Eingabewerten liegen. Dazu werden die Gewichte so geändert, dass ein geeignetes Fehlermaß minimiert wird. Als Fehlermaß kann etwa die Wurzel des mittleren quadratischen Fehlers der Einzelwerte verwendet werden.

Beispielhaft sind in Figur 2 in der Eingabeschicht 202 Eingabe-Neuronen 220, 222 und in der Ausgabeschicht 204 Ausgabe-Neuronen 230, 232 dargestellt. Umfassen die Datensätze etwa Messungen von Druck und Temperatur (z.B. in einer Hydraulikanlage), wird der Wert des Druckes p an einem der Eingabe-Neuronen 220 eingegeben, symbolisiert durch einen Pfeil 224, und der Wert der Temperatur T am anderen Eingabe-Neuron 222 eingegeben, symbolisiert durch einen Pfeil 226. Der Autoencoder (also das Modell) bildet diese an den Eingabe-Neuronen eingegebenen Eingabewerte, und weitere nicht dargestellte Eingabewerte, die weiteren Betriebsparametern in den Datensätzen entsprechen, auf Ausgabewerte an den Ausgabe-Neuronen 230, 232 ab. Hierbei soll an einem Ausgabe-Neuron 230 ein dem Druck entsprechender Wert p' ausgegeben werden, symbolisiert durch einen Pfeil 234, und am anderen Ausgabe-Neuron 232 ein der Temperatur entsprechender Wert T' ausgegeben werden, symbolisiert durch einen Pfeil 236. Der Autoencoder wird so trainiert, dass die Ausgabewerte p', T', und weitere nicht dargestellte Ausgabewerte, möglichst nahe bei den entsprechenden Eingabewerten p, T liegen, d.h. der Rekonstruktionsfehler soll bezüglich eines geeigneten Fehlermaßes möglichst klein sein.

Es sei erneut darauf hingewiesen, dass strukturelle Einzelheiten des in dem Überwachungsverfahren verwendeten Modells nicht essentiell für die Ausführung der vorliegenden Erfindung sind. Autoencoder stellen lediglich eine Möglichkeit zur Verwirklichung geeigneter Modelle dar. Figur 2 wurde vor allem der Vollständigkeit halber und zum besseren Verständnis der Erfindung beigefügt.

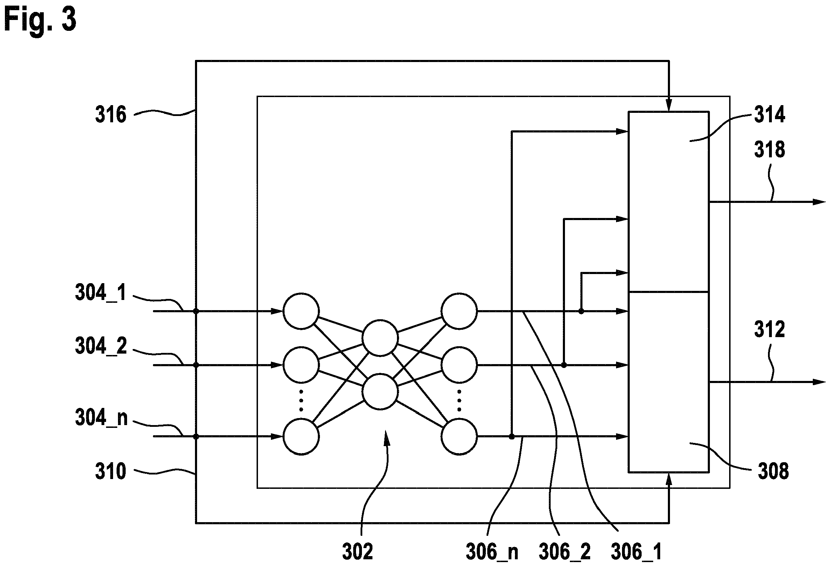

Figur 3 zeigt schematisch eine Funktionsskizze der Ursachenanalyse gemäß einer Ausführungsform der Erfindung. In Figur 3 ist die Ursachenanalyse für ein Maschinen-Überwachungsverfahren, das ein Modell 302 verwendet, schematisch erklärt. Das Modell 302 ist hier symbolisch als Autoencoder mit drei Schichten und einigen Neuronen skizziert, kann jedoch ein Autoencoder mit beliebig vielen Schichten und beliebig vielen Neuronen in jeder Schicht oder auch ein anderes Modell sein. Die Darstellung des Modells 302 in Figur 3 ist lediglich als symbolische Darstellung für beliebige geeignete Modelle gedacht. Dies gilt ebenso für die in den weiteren Figuren 4, 5A und 5B skizzierten Modelle und Untermodelle, die jeweils durch vereinfachte Autoencoder symbolisiert sind.

Die Eingabewerte 304_1, 304_2, ..., 304_n werden durch das Modell 302 auf Ausgabewerte 306_1, 306_2, ..., 306_n abgebildet. Wie bereits erläutert, entsprechen die Eingabewerte den Werten von erfassten Betriebsparametern bzw. Sensorwerten (n ist also die Anzahl der erfassten Betriebsparameter) und die Ausgabewerte sollen die gleiche Bedeutung habe wie die Eingabewerte, d.h. der Ausgabewert 306_1 soll dem Eingabewert 304_1 entsprechen, der Ausgabewert 306_2 soll dem Eingabewert 304_2 entsprechen, usw. Das Modell wird anhand von Referenzzuständen so trainiert, dass eine Abweichung zwischen den Eingabewerten und ihren entsprechenden Ausgabewerten bezüglich einer Metrik minimiert wird. Eine mögliche Metrik ist z.B. der Mittelwert aus der Summe der Quadrate der Abweichungen der einzelnen Ein- und Ausgabewerte. Diese Metrik wird, nach dem Training, im Rahmen einer Anomalieüberwachung 308, die die Ausgabewerte 306_1, 306_2, ..., 306_n mit den Eingabewerten 304_1, 304_2, ..., 304_n, die an die Anomalieüberwachung 308 weitergegeben werden (Pfeil 310), vergleicht, ermittelt und als Anomaliemaß 312 ausgegeben. Übersteigt das Anomaliemaß 312 eine vorgegebene Schwelle, so wird von einem anomalen Zustand der Maschine ausgegangen, da das Modell so trainiert wurde, dass das Anomaliemaß 312 bei einem normalen, störungsfreien Betrieb (der den Referenzzuständen entspricht) möglichst klein ist. Dieses Überwachungsverfahren zur Anomalie-Ermittlung ist an und für sich bekannt.

Die Erfindung baut hierauf wie folgt auf. Es werden zusätzlich die Ausgabewerte 306_1, 306_2, ..., 306_n und die Eingabewerte 304_1, 304_2, ..., 304_n (über Pfeil 316) an eine Ursachenermittlung 314 weitergegeben, wenn festgestellt wurde, dass ein anomaler Zustand vorliegt. In der Ursachenermittlung 314 werden, wie vorstehend im Zusammenhang mit dem erfindungsgemäßen Verfahren beschrieben, Rekonstruktionsfehler für jeden Betriebsparameter bestimmt und basierend auf den Rekonstruktionsfehlern ein oder mehrere Betriebsparameter ausgewählt. Die ausgewählten Betriebsparameter bilden dann eine Ausgabe 318 der Ursachenermittlung 314.

Erfindungsgemäß zeigt die Figur 4 eine Funktionsskizze der Ursachenanalyse wobei hier die Bestimmung der Rekonstruktionsfehler durch eigens vorgesehene Untermodelle (die wieder symbolisch als vereinfachte Autoencoder dargestellt sind) 402_2, 402_n erfolgt. Die Struktur entspricht im Wesentlichen der in Figur 3 dargestellten Struktur mit dem Unterschied, dass die Ursachenermittlung 314 in Figur 4 entsprechend dieser bevorzugten Ausführungsform die zusätzliche Struktur der Untermodelle nutzt. Das Überwachungsverfahren zur Anomalie-Ermittlung bleibt das gleiche wie in Figur 3, hier gilt die Beschreibung zu Figur 3 weiterhin, ebenso werden die gleichen Bezugszeichen verwendet. Die Unterschiede sind im Folgenden erläutert.

Zusätzlich zum Modell 302, das sozusagen das Hauptmodell ist, ist für jeden Betriebsparameter, also für jeden Eingabewert 304_1, 304_2, ..., 304_n des Modells 302, jeweils ein Untermodell vorgesehen (wobei in der Figur stellvertretend die Untermodelle 402_2 und 402_n dargestellt sind). Jedes Untermodell ist einem Betriebsparameter zugeordnet. Die Eingabewerte eines Untermodells umfassen die Ausgabewerte 306_1, 306_2, ..., 306_n mit Ausnahme desjenigen Ausgabewerts, der dem Betriebsparameter entspricht, dem das Untermodell zugeordnet ist.

Als zusätzlicher Eingabewert wird für jedes Untermodell der Wert des Betriebsparameters, dem das Untermodell zugeordnet ist, verwendet. Beispielsweise umfasst das in Figur 4 gezeigte Untermodell 402_n die Ausgabewerte des Modells 302 mit Ausnahme des Ausgabewerts 306_n, stattdessen dient der entsprechende Eingabewert 304_n auch als Eingabewerte für das Untermodell 402_n, dies ist durch Pfeile 404 bzw. 406 verdeutlicht. Für das Untermodell 402_2 sind analoge Pfeile eingezeichnet, nur dass hier der Eingabewert 304_2 als zusätzlicher Eingabewert verwendet wird. Weitere Möglichkeiten, mindestens einen zusätzlichen Eingabewert zu wählen, werden in Zusammenhang mit den Figuren 5A und 5B besprochen.

Die Untermodelle 402_1, 402_2, ... 402_n werden zusammen mit dem Modell 302 trainiert, wobei für jedes der Untermodelle eine Abweichungsmetrik 408_2, 408_n bestimmt wird, die während des Trainings minimiert wird. Wird vom Überwachungssystem eine Anomalie erkannt, mittels des Anomaliemaßes 312, so wird der Rekonstruktionsfehler 410_n, 410_2 jedes der Betriebsparameter durch die Abweichungsmetrik 408_n, 408_2 des zu dem jeweiligen Betriebsparameter gehörigen Untermodells 402_n, 402_2 definiert, ist also durch den entsprechenden Zahlenwert gegeben. Im Rahmen der Ursachenermittlung 314 wird dann basierend auf den Rekonstruktionsfehlern 408_n, 408_2 die Auswahl 412 mindestens eines Betriebsparameters getroffen (z.B. indem diejenigen mit den größten Rekonstruktionsfehlern ausgewählt werden, wie weiter oben beschrieben) und das Ergebnis der Auswahl als Ausgabe 318 ausgegeben.

Figuren 5A und 5B zeigen Ausschnitte von Funktionsskizzen der Ursachenanalyse gemäß der Erfindung. Genauer sind in den Figuren 5A und 5B Untermodelle, wie sie in Zusammenhang mit Figur 4 eingeführt wurden, skizziert. Der Unterschied zu der in Figur 4 gezeigten Ausführung liegt darin, dass als zusätzliche Eingabe für die Untermodelle ein anderer Wert (bzw. Werte) gewählt wird. In beiden Figuren ist jeweils das Untermodell gezeigt (Bezugszeichen 502 in Figur 5A, Bezugszeichen 512 in Figur 5A), das dem Betriebsparameter zugehörig ist, dem der Eingabewert 304_1 entspricht. D.h. (vgl. die Beschreibung in Zusammenhang mit Figur 4), die Ausgabewerte 306_2, ... 306_n des Modells 302 dienen als Eingabewerte für das Untermodell 502, 512. Es versteht sich , dass für alle Betriebsparameter entsprechende Untermodelle vorgesehen sind, auch wenn diese in der Figur nicht gezeigt sind.

In Figur 5A weist das Untermodell 502 zwei zusätzliche Eingabewerte auf, nämlich, den Eingabewert und den Ausgabewert des Modells, die dem Betriebsparameter entsprechen, dem das Untermodell zugehörig ist, d.h. sowohl Eingabewert 304_1 als auch Ausgabewert 306_1 des Modells 302. Für das Untermodell 502 ist wieder (wie bei Figur 4) eine Abweichungsmetrik 504 definiert, mittels derer das Untermodell trainiert und, wenn eine Anomalie erkannt wird, der Rekonstruktionsfehler 506 des Betriebsparameters, dem das Untermodell 502 zugehörig ist, bestimmt wird.

In Figur 5B weist das Untermodell 512 als zusätzlichen Eingabewert den Absolutwert der Differenz zwischen dem Eingabewert und dem Ausgabewert des Modells, die dem Betriebsparameter entsprechen, dem das Untermodell zugehörig ist, d.h. den Absolutwert der Differenz zwischen Eingabewert 304_1 und Ausgabewert 306_1 des Modells 302, auf. In Figur 5B sind entsprechende Funktionseinheiten 514, 516 gezeigt, in denen die Differenzbildung (514) und die Absolutwertbildung (516) realisiert werden. Für das Untermodell 512 ist wieder (wie bei Figur 4) eine Abweichungsmetrik 518 definiert, mittels derer das Untermodell trainiert und, wenn eine Anomalie erkannt wird, der Rekonstruktionsfehler 520 des Betriebsparameters, dem das Untermodell 502 zugehörig ist, bestimmt wird.

## Patentansprüche

1. Verfahren zur Analyse der Ursache für einen anomalen Zustand einer Maschine in einem auf einem Modell (302) basierenden Überwachungsverfahren, das anomale Zustände der Maschine erkennt, indem es ein Anomaliemaß bestimmt,
wobei das Modell Maschinenzustände modelliert, indem mindestens zwei Betriebsparameter der Maschine, die als Eingabewerte des Modells dienen, als Ausgabewerte rekonstruiert werden, wobei die Betriebsparameter Sensorwerte, die durch an der Maschine angeordnete Sensoren gemessen werden, oder vorverarbeitete Sensorwerte sind,
wobei die Ausgabewerte des Modells gegenüber den jeweils entsprechenden Eingabewerten Abweichungen aufweisen und das Modell durch maschinelles Lernen trainiert wurde, die Abweichungen zu minimieren;
wobei, wenn durch das Überwachungsverfahren ein anomaler Zustand erkannt wurde, das Verfahren umfasst:
Bestimmen (120) eines Rekonstruktionsfehlers für jeden der Betriebsparameter basierend auf dem Eingabewert und dem durch das Modell rekonstruierten Ausgabewert des jeweiligen Betriebsparameters;
Auswählen (130) mindestens eines Betriebsparameters auf Grundlage der Rekonstruktionsfehler; und
Ausgeben (140) des mindestens einen ausgewählten Betriebsparameters;
**dadurch gekennzeichnet, dass** das Auswählen des mindestens einen Betriebsparameters auf Grundlage einer Größe der Rekonstruktionsfehler erfolgt, wobei eine bestimmte Anzahl von Betriebsparametern mit dem größten Rekonstruktionsfehler ausgewählt wird; und dass das Verfahren weiterhin umfasst:
Bereitstellen und Trainieren eines Untermodells (402_n, 402_2, 502, 512) für wenigstens einen der Betriebsparameter, wobei für den wenigstens einen der Betriebsparameter das jeweilige Untermodell als Eingabewerte die Ausgabewerte des Modells (302) mit Ausnahme des desjenigen Ausgabewerts, der dem Betriebsparameter entspricht, dem das Untermodell zugeordnet ist, umfasst und als weiteren Eingabewert bzw. weitere Eingabewerte den Wert des Betriebsparameters, den Wert des Betriebsparameters und den dem Betriebsparameter entsprechenden Ausgabewert des Modells (302), oder den Absolutwert der Differenz zwischen Eingabewert des Betriebsparameters und dem dem Betriebsparameter entsprechenden Ausgabewert des Modells (302) umfasst; und
im Schritt des Bestimmens der Rekonstruktionsfehler, Bestimmen des Rekonstruktionsfehlers des wenigstens eine der Betriebsparameter als Abweichung von Eingabewerte und Ausgabewert dieses Betriebsparameters in dem zu diesem Betriebsparameter gehörigen Untermodell und Ausgabe der zu den ausgewählten Betriebsparametern gehörigen Rekonstruktionsfehler.

2. Verfahren nach Anspruch 1, wobei wenigstens einer der Rekonstruktionsfehler als Absolutwert einer Differenz von Eingabewert und Ausgabewert für jeden der Betriebsparameter bestimmt wird.

3. Verfahren nach Anspruch 1 oder 2, wobei wenigstens einer Rekonstruktionsfehler bestimmt wird als Quotient eines Absolutwerts einer Differenz von Eingabewert und Ausgabewert für jeden der Betriebsparameter und eines Gesamtrekonstruktionsfehlers, wobei bevorzugt der Gesamtrekonstruktionsfehler dem Anomaliemaß entspricht.

4. Verfahren nach einem der vorstehenden Ansprüche, weiterhin umfassend:
Bestimmen und Erfassen von Abweichungen zwischen Eingabewerten und Ausgabewerten für wenigstens einen der Betriebsparameter, wenn durch das Überwachungsverfahren kein anomaler Zustand erkannt wurde, um eine Stichprobe von normalen Abweichungen für den wenigstens einen der Betriebsparameter zu erhalten;
Bestimmen einer Wahrscheinlichkeitsverteilung für die Abweichungen des wenigstens einen der Betriebsparameter aus den Stichproben; und
im Schritt des Bestimmens der Rekonstruktionsfehler, Bestimmen des Rekonstruktionsfehlers des wenigstens einen der Betriebsparameter basierend auf der jeweiligen Wahrscheinlichkeitsverteilung.

5. Verfahren nach Anspruch 4, wobei die Wahrscheinlichkeitsverteilung als eine Standardverteilung bestimmt wird, und der Rekonstruktionsfehler für den wenigsten einen der Betriebsparameter der in Standardabweichungen gemessenen Abweichung zwischen Eingabewert und Ausgabewert vom Mittelwert der Standardverteilung entspricht.

6. Verfahren nach Anspruch 1, wobei wenigstens ein Betriebsparameter ausgewählt wird, dessen Rekonstruktionsfehler eine Größe aufweist, die über einer bestimmten Schwelle liegt, wobei weiter bevorzugt die Schwelle basierend auf einer Verteilung Größe der Rekonstruktionsfehler bestimmt wird.

7. Verfahren nach einem der vorstehenden Ansprüche, weiterhin umfassend
Variieren des zu dem mindestens einen ausgewählten Betriebsparameter gehörigen Eingabewerts des Modells in einem definierten Bereich; und
Analysieren des Verhaltens der Variation der Rekonstruktionsfehler und/oder des Verhaltens des Anomaliemaßes.

8. Recheneinheit, die dazu eingerichtet ist, ein Verfahren nach einem der vorstehenden Ansprüche durchzuführen.

9. Computerprogramm, das eine Recheneinheit veranlasst, ein Verfahren nach einem der Ansprüche 1 bis 7 durchzuführen, wenn es auf der Recheneinheit ausgeführt wird.

10. Maschinenlesbares Speichermedium mit einem darauf gespeicherten Computerprogramm nach Anspruch 9.

## Claims

1. Method for analysing the cause of an anomalous state of a machine in a supervision method that is based on a model (302) and that recognizes anomalous states of the machine by determining an anomaly metric,
wherein the model models machine states by reconstructing at least two operating parameters of the machine, which serve as input values of the model, as output values, wherein the operating parameters are sensor values that are measured by sensors arranged on the machine or are pre-processed sensor values,
wherein the output values of the model exhibit deviations in comparison to the respectively corresponding input values and the model has been trained, through machine learning, to minimize the deviations;
wherein, when the supervision method has recognized an anomalous state, the method comprises:
determining (120) a reconstruction error for each of the operating parameters based on the input value and the output value, reconstructed by the model, of the respective operating parameter;
selecting (130) at least one operating parameter on the basis of the reconstruction errors; and
outputting (140) the at least one selected operating parameter;
**characterized in that** the at least one operating parameter is selected on the basis of a size of the reconstruction errors, wherein a specific number of operating parameters containing the largest reconstruction error is selected; and **in that** the method furthermore comprises:
providing and training a submodel (402_n, 402_2, 502, 512) for at least one of the operating parameters, wherein, for the at least one of the operating parameters, the respective submodel comprises, as input values, the output values of the model (302) with the exception of that output value that corresponds to the operating parameter to which the submodel is assigned and comprises, as further input value or further input values, the value of the operating parameter, the value of the operating parameter and the output value, corresponding to the operating parameter, of the model (302), or comprises the absolute value of the difference between the input value of the operating parameter and the output value, corresponding to the operating parameter, of the model (302); and
in the step of determining the reconstruction errors, determining the reconstruction error of the at least one of the operating parameters as a deviation between input values and output value of this operating parameter in the submodel associated with this operating parameter and outputting the reconstruction errors associated with the selected operating parameters.

2. Method according to Claim 1, wherein at least one of the reconstruction errors is determined as an absolute value of a difference between input value and output value for each of the operating parameters.

3. Method according to Claim 1 or 2, wherein at least one reconstruction error is determined as a quotient of an absolute value of a difference between input value and output value for each of the operating parameters and an overall reconstruction error, wherein the overall reconstruction error preferably corresponds to the anomaly metric.

4. Method according to one of the preceding claims, furthermore comprising:
determining and acquiring deviations between input values and output values for at least one of the operating parameters when the supervision method has not recognized an anomalous state, in order to obtain a sample of normal deviations for the at least one of the operating parameters;
determining a probability distribution for the deviations of the at least one of the operating parameters from the samples; and
in the step of determining the reconstruction errors, determining the reconstruction error of the at least one of the operating parameters based on the respective probability distribution.

5. Method according to Claim 4, wherein the probability distribution is determined as a standard distribution, and the reconstruction error for the at least one of the operating parameters corresponds to the deviation, measured in standard deviations, between input value and output value from the average value of the standard distribution.

6. Method according to Claim 1, wherein at least one operating parameter is selected, the reconstruction error of said operating parameter having a size that is greater than a specific threshold, wherein the threshold is more preferably determined based on a distribution of size of the reconstruction errors.

7. Method according to one of the preceding claims, furthermore comprising
varying the input value, associated with the at least one selected operating parameter, of the model in a defined range; and
analysing the behaviour of the variation of the reconstruction errors and/or the behaviour of the anomaly metric.

8. Computing unit configured to perform a method according to one of the preceding claims.

9. Computer program that prompts a computing unit to perform a method according to one of Claims 1 to 7 when it is executed on the computing unit.

10. Machine-readable storage medium comprising a computer program according to Claim 9 stored thereon.

## Revendications

1. Procédé permettant d'analyser la cause d'un état anormal d'une machine dans un procédé de surveillance basé sur un modèle (302) et qui identifie des états anormaux de la machine en déterminant un degré d'anomalie,
dans lequel le modèle modélise des états de machine en ce qu'au moins deux paramètres de fonctionnement de la machine servant de valeurs d'entrée pour le modèle sont restitués comme valeurs de sortie, dans lequel les paramètres de fonctionnement sont des valeurs de capteur qui sont mesurées par des capteurs disposés sur la machine, ou sont des valeurs de capteur prétraitées,
dans lequel les valeurs de sortie du modèle présentent des écarts par rapport aux valeurs d'entrée respectivement correspondantes, et le modèle a été entraîné par apprentissage machine pour minimiser les écarts ;
dans lequel, si le procédé de surveillance a identifié un état anormal, le procédé comprend les étapes consistant à :
déterminer (120) une erreur de restitution pour chacun des paramètres de fonctionnement sur la base de la valeur d'entrée et de la valeur de sortie, restituée par le modèle, du paramètre de fonctionnement respectif ;
sélectionner (130) au moins un paramètre de fonctionnement sur la base des erreurs de restitution ; et
sortir (140) ledit au moins un paramètre de fonctionnement sélectionné ;
**caractérisé en ce que** la sélection du au moins un paramètre de fonctionnement est effectuée sur la base d'une grandeur de l'erreur de restitution, dans lequel un certain nombre de paramètres de fonctionnement ayant la plus grande erreur de restitution est sélectionné ; et
**en ce que** le procédé comprend en outre les étapes consistant à :
fournir et entraîner un sous-modèle (402_n, 402_2, 502, 512) pour au moins l'un des paramètres de fonctionnement, dans lequel pour ledit au moins un des paramètres de fonctionnement, le sous-modèle respectif comprend comme valeurs d'entrée les valeurs de sortie du modèle (302) à l'exception de la valeur de sortie correspondant au paramètre de fonctionnement qui est associé au sous-modèle, et comprend comme valeur(s) d'entrée supplémentaire(s) la valeur du paramètre de fonctionnement, la valeur du paramètre de fonctionnement et la valeur de sortie correspondant au paramètre de fonctionnement du modèle (302), ou la valeur absolue de la différence entre la valeur d'entrée du paramètre de fonctionnement et la valeur de sortie correspondant au paramètre de fonctionnement du modèle (302) ; et
à l'étape de la détermination des erreurs de restitution, déterminer l'erreur de restitution du au moins un des paramètres de fonctionnement comme un écart entre les valeurs d'entrée et la valeur de sortie de ce paramètre de fonctionnement dans le sous-modèle associé à ce paramètre de fonctionnement, et sortir les erreurs de restitution associées aux paramètres de fonctionnement sélectionnés.

2. Procédé selon la revendication 1, dans lequel au moins l'une des erreurs de restitution est déterminée comme une valeur absolue d'une différence entre la valeur d'entrée et la valeur de sortie pour chacun des paramètres de fonctionnement.

3. Procédé selon la revendication 1 ou 2, dans lequel au moins une erreur de restitution est déterminée comme un quotient d'une valeur absolue d'une différence entre la valeur d'entrée et la valeur de sortie pour chacun des paramètres de fonctionnement et d'une erreur de restitution totale, dans lequel l'erreur de restitution totale correspond de préférence au degré d'anomalie.

4. Procédé selon l'une quelconque des revendications précédentes, comprenant en outre les étapes consistant à :
déterminer et détecter des écarts entre des valeurs d'entrée et des valeurs de sortie pour au moins l'un des paramètres de fonctionnement si le procédé de surveillance n'a identifié aucun état anormal afin d'obtenir un échantillon d'écarts normaux pour ledit au moins un paramètre de fonctionnement ;
déterminer une distribution de probabilité pour les écarts du au moins un des paramètres de fonctionnement à partir des échantillons ; et
à l'étape de la détermination des erreurs de restitution, déterminer l'erreur de restitution du au moins un des paramètres de fonctionnement sur la base de la distribution de probabilité respective.

5. Procédé selon la revendication 4, dans lequel la distribution de probabilité est déterminée comme une distribution normale, et l'erreur de restitution pour ledit au moins un des paramètres de fonctionnement correspond à l'écart mesuré en écarts-types entre la valeur d'entrée et la valeur de sortie par rapport à la moyenne de la distribution normale.

6. Procédé selon la revendication 1, dans lequel ledit au moins un paramètre de fonctionnement est sélectionné dont l'erreur de restitution présente une grandeur qui est supérieure à un seuil déterminé, dans lequel de plus grande préférence le seuil est déterminé sur la base d'une distribution de la grandeur des erreurs de restitution.

7. Procédé selon l'une quelconque des revendications précédentes, comprenant en outre les étapes consistant à
faire varier dans une plage définie la valeur d'entrée associée audit au moins un paramètre de fonctionnement sélectionné du modèle ; et
analyser le comportement de la variation des erreurs de restitution et/ou le comportement du degré d'anomalie.

8. Unité de calcul qui est conçue pour exécuter un procédé selon l'une quelconque des revendications précédentes.

9. Programme informatique qui fait qu'une unité de calcul exécute un procédé selon l'une quelconque des revendications 1 à 7 lorsqu'il est exécuté sur l'unité de calcul.

10. Support de stockage lisible par machine sur lequel est stocké un programme informatique selon la revendication 9.
